# EUROPÄISCHE PATENTSCHRIFT

(11) **EP 2 808 281 B1**
(45) Veröffentlichungstag und Bekanntmachung des Hinweises auf die Patenterteilung: **25.07.2018**
(21) Anmeldenummer: 14164399.9
(22) Anmeldetag: 11.04.2014
(51) Int. Cl.: B65H 21/00, B29D 30/42

(54) **Spleißeinrichtung zum Spleißen von Cordmaterial**
Splicing device for splicing cord material
Dispositif d'épissurage pour l'épissurage de cordages

(30) Priorität: 29.05.2013 DE 202013102342 U
(43) Veröffentlichungstag der Anmeldung: 03.12.2014
(73) Patentinhaber: Karl Eugen Fischer GmbH, 96224 Burgkunstadt (DE)
(72) Erfinder: Flieger, Walter, 95326 Kulmbach (DE); Schulz, Udo, 95448 Bayreuth (DE)
(74) Vertreter: Patentanwälte Olbricht Buchhold Keulertz

(56) Entgegenhaltungen:
- DE-A1- 4 309 013
- US-A- 4 082 592

## Beschreibung

Die Erfindung betrifft eine Spleißeinrichtung zum Spleißen von Bandabschnitten eines Materialbandes insbesondere aus einem Cordmaterial, dass eine Verstärkung aus Textil- und/oder Stahldrähten aufweist, mit einer Spleißklappe, die sich in einer Maschinenquerrichtung erstreckt und parallel zu ihrer Längsachse verschwenkbar gelagert ist, wobei die Bandabschnitte zwischen einer Unterseite der Spleißklappe und einer Anlagefläche hindurchführbar sind und die Spleißklappe über Andrückzylinder in Richtung Anlagefläche zum Herstellen einer Spleißverbindung zwischen zwei Bandabschnitten betätigbar ist, wobei die Andrückzylinder zwischen einer Querverbindung und der Spleißklappe angeordnet sind.

Mit einer derartigen Spleißeinrichtung wird eine Kante eines in einer Schere zuvor geschnittenen Bandabschnitts mit einer Kante eines darauffolgenden Bandabschnitts verspleißt und so ein neues Endlosband hergestellt. Durch das vorherige Schneiden der Bandabschnitte kann nicht nur die Breite des neu hergestellten Endlosbandes eingestellt werden, sondern auch die Ausrichtung von Verstärkungsfasern beliebig bestimmt werden.

Die verspleißten Endlosbänder werden, insbesondere wenn sie ein Cordmaterial mit einer Verstärkung aus Textil- und/oder Stahldrähten aufweisen, beispielsweise in der Reifenindustrie zur Herstellung von Reifenkarkassen eingesetzt. Das Materialband, das in der Regel relativ dünn und klebrig ist, wird dabei von einer Vorratsrolle abgezogen und mit Hilfe einer Fördereinrichtung durch eine Schere geführt. Dort werden die Bandabschnitte in einer definierten Breite abgeschnitten. Anschließend werden die Bandabschnitte an ihren zur Schneidkante angrenzenden Kanten wieder miteinander verbunden, wobei das Spleißen eine Verbindungsart darstellt, die eine sehr haltbare Verbindung ermöglicht, ohne das zusätzliche Verbindungsmittel eingesetzt werden.

In der Regel wird dabei ein Überlappspleißer eingesetzt, bei dem die Kante des nachfolgenden Bandabschnitts überlappend mit der Kante des vorhergehenden Bandabschnitts abgelegt wird. Mit Hilfe der Spleißklappe wird dann im Bereich der überlappenden Kanten eine Andrückkraft aufgebracht, wodurch die Spleißverbindung hergestellt wird. Die Spleißklappe kann dafür die Bandabschnitte übergreifen, also auf der gesamten Länge der Bandabschnitte eine gleichmäßige Andrückkraft erzeugen.

Für das Herstellen der Spleißverbindung muss die Spleißklappe mit relativ großer Kraft in Richtung Anlagefläche belastet werden, um ein Verspleißen der zwischen der Spleißklappe und der Anlagefläche angeordneten Bandabschnitte zu erreichen. Es ist bekannt, dafür zwischen der Querverbindung und der Spleißklappe Andrückzylinder vorzusehen, die die Kraft in die Spleißklappe an mehreren Stellen einleiten. Beispielsweise können drei Andrückzylinder vorgesehen sein, wobei einer mittig angeordnet ist und zwei Andrückzylinder den seitlichen Endbereichen der Spleißklappe zugeordnet sind.

Bei den bekannten Spleißeinrichtungen greifen die Andrückzylinder an einer Rückseite der Spleißklappe an. Dadurch ist es zwar möglich, eine Formschlussverbindung herzustellen und entsprechend hohe Kräfte zu übertragen, die Montage der Andrückzylinder ist aber sehr aufwendig, da der Zugang in den rückseitigen Bereich der Spleißklappe aufgrund baulicher Gegebenheiten der Spleißeinrichtung sehr schwierig ist. Unter dem rückseitigem Bereich wird dabei der Raum angesehen, der in Zuführrichtung der Bandabschnitte gesehen hinter der Spleißklappe bzw. hinter der Schwenkachse der Spleißklappe liegt. Dementsprechend ist auch eine Wartung, Reparatur und gegebenenfalls ein Austausch der Andrückzylinder immer mit relativ hohem Aufwand verbunden, der entsprechend lange Stillstandszeiten der Spleißeinrichtung zur Folge hat.

Der Erfindung liegt die Aufgabe zugrunde, eine Spleißeinrichtung anzugeben, die die Nachteile des Stands der Technik beseitigt und insbesondere mit geringerem Aufwand herzustellen und zu Warten ist.

Erfindungsgemäß wird diese Aufgabe dadurch gelöst, dass die Andrückzylinder mit ihrem einen Ende an der Querverbindung rückseitig bezüglich der Spleißklappe und mit ihrem anderen Ende an vorderseitigen Befestigungsabschnitten der Spleißklappe befestigt sind.

Die Andrückzylinder strecken sich also von der einen Seite - der Rückseite - der Spleißklappe bis auf die andere Seite - der Vorderseite. Ein Zugang zu den an der Vorderseite der Spleißklappe angeordneten Befestigungsabschnitten ist sehr einfach möglich, sodass die Verbindung zwischen der Spleißklappe und dem Andrückzylinder sehr einfach herstellbar ist. Beispielsweise werden Zylinderstößel der Andrückzylinder an den Befestigungsabschnitten der Spleißklappe befestigt, während der Zylinder an der Querverbindung gelagert wird. Bei den Andrückzylindern handelt es sich insbesondere um pneumatisch betätigte Zylinder, es können aber auch hydraulische Zylinder eingesetzt oder eine elektrische Betätigung vorgesehen werden.

Durch die Verlagerung der Angriffspunkte der Andrückzylinder von der Rückseite der Spleißklappe auf die Vorderseite der Spleißklappe ergibt sich somit zum einen eine einfachere Erstmontage, also eine Verringerung des Herstellungsaufwandes, und zum anderen ein vereinfachter Zugang für Wartungszwecke.

Bevorzugterweise ist an der Unterseite der Spleißklappe eine elastische Spleißleiste angeordnet. Mit Hilfe der elastischen Spleißleiste werden die Andrückkräfte der Spleißklappe gleichmäßig auf die Kanten der Bandabschnitte übertragen und insbesondere ein lokales Überdrücken vermieden. Darüber hinaus kann die Spleißleiste relativ einfach im Falle von Verschleiß ausgetauscht werden, ohne dass ein Austausch der gesamten Spleißklappe erforderlich ist. Ein Wartungsaufwand kann so gering gehalten werden.

Vorzugsweise ist die Spleißklappe in Seitenwangen gelagert, die mit der Querverbindung verbunden sind. Die Relativposition zwischen Spleißklappe und Querverbindung wird dann über die Seitenwangen immer eindeutig definiert. Dabei wird über die Seitenwangen ein beim Andrücken der Spleißklappe auftretender Kraftschluss zur Querverbindung hergestellt. Dafür ist eine möglichst direkte Verbindung von der Spleißklappe über die Seitenwangen zur Querverbindung günstig.

Bevorzugterweise ist die Anlagefläche an unterhalb der Spleißklappe angeordneten Unterstützungstischen und an zwischen den Unterstützungstischen parallel zueinander angeordneten Transportbändern ausgebildet. Die Anlagefläche ist also mehrteilig aufgebaut und setzt sich aus den Oberflächen der Unterstützungstische und den Oberseiten der Transportbänder zusammen. Mit Hilfe der Transportbänder lassen sich die miteinander verspleißten Bandabschnitte abtransportieren. Durch die Unterstützungstische wird dabei zumindest ein Teil der Andrückkräfte während des Spleißens aufgenommen, sodass die Belastung der Transportbänder nicht übermäßig groß wird.

Dabei ist besonders bevorzugt, dass der äußere Unterstützungstisch eine Vakuumansaugung aufweist. Durch eine Vakuumansaugung am äußeren Unterstützungstisch, der im Übrigen den anderen Unterstützungstischen entspricht, ist es möglich, nach dem Schneiden aufstehende Abschnittskanten in Richtung Anlagefläche anzusaugen. Gleichzeitig kann eine Fixierung der Bandabschnitte erfolgen, was die Ablagegenauigkeit erhöht.

In einer bevorzugten Weiterbildung weisen die Unterstützungstische und/oder die Spleißleiste eine Antihaftbeschichtung auf. Das Bandmaterial, insbesondere ein Cordmaterial, ist in der Regel relativ klebrig, wobei durch das Vorsehen einer Antihaftbeschichtung ein einfacheres Lösen der Bandabschnitte nach Abschluss des Spleißvorganges erreicht wird. Die Bandabschnitte können dann einfacher mithilfe der Transportbänder abtransportiert werden.

Ein sicherer Halt der Bandabschnitte bereits vor Beginn des Spleißvorgangs kann mithilfe von Niederhaltepins erreicht werden, die an der Querverbindung angeordnet sind und in Richtung Anlagefläche bewegbar sind. Die Bandabschnitte können dann zwischen den Niederhaltepins und der Anlagefläche klemmend gehalten werden. Um die Ausprägung von Druckstellen in den Bandabschnitten zu vermeiden, können die Niederhaltepins am unteren Ende eine vergrößerte Anlagefläche aufweisen, die beispielsweise an Schuhen ausgebildet ist, die an den Enden angeordnet sind.

Dabei ist es besonders bevorzugt, dass die Niederhaltepins durch Überdruckzylinder betätigbar sind. Damit lassen sich relativ einfach die erforderlichen Andrückkräfte bei schnellen Zeitschalten erzeugen.

Um ein Anhaften der Bandabschnitte an den Niederhaltepins zu vermeiden beziehungsweise ein sicheres Ablösen zu gewährleisten, ist an der Querverbindung bevorzugterweise mindestens eine Abstreifvorrichtung angeordnet, wobei gegebenenfalls jedem Niederhaltepin eine Abstreifvorrichtung zugeordnet ist.

Die Abstreifvorrichtung kann im einfachsten Fall als sich parallel zur Spleißklappe erstreckende Leiste ausgebildet sein, wobei jeweils ein Ende der Niederhaltepins, das mit den Bandabschnitten in Kontakt kommt, an dieser Leiste vorbeigeführt wird.

In einer bevorzugten Weiterbildung ist der Niederhaltepin durch eine Öffnung in der Abstreifvorrichtung bewegbar. Beim Entfernen der Niederhaltepins von der Anlagefläche kann so der Bandabschnitt rund um den jeweiligen Niederhaltepin relativ gleichmäßig zurückgehalten werden. Eine Veränderung der Position des Bandabschnittes ist damit nicht zu befürchten. Beispielsweise kann die Abstreifvorrichtung dabei ringförmig oder mit einem polygonalen Umfang in Form eines Rahmens ausgebildet sein, der in der Querverbindung befestigt ist.

Vorzugsweise weist die Spleißeinrichtung Sensorelemente zum Detektieren einer Kante des Cordmaterials auf, wobei die Sensorelemente insbesondere in Maschinenquerrichtung nebeneinander angeordnet sind. Mithilfe dieser Sensorelemente lässt sich die Kante eines Bandabschnitts überwachen. Die Sensorelemente können dabei beispielsweise als Lichtschranken ausgebildet sein.

In Verbindung mit einer übergeordneten Regelung und den Niederhaltepins lässt sich dadurch auch eine Ausrichtung der Bandabschnitte erreichen. Dies erfolgt während des Abtransports der miteinander verspleißten Bandabschnitte. Dafür ist jedem Niederhaltepin ein Sensorelement zugeordnet, beispielsweise eine Lichtschranke, die dann frei wird, wenn das Ende des Bandabschnitts über sie hinweg bewegt wurde. Sobald die Lichtschranke frei wird, kann der Niederhaltepin abfahren und den Bandabschnitt in der Spleißeinrichtung festklemmen. Die Transportbänder fahren solange weiter, bis alle Sensorelemente beziehungsweise Lichtschranken angesprochen haben und alle Niederhaltepins abgefahren sind, also den Bandabschnitt klemmend festhalten. Durch das Weiterfahren der Transportbänder erfolgt eine Ausrichtung der Kante des letzten Endabschnittes, der dann in genau definierter Position liegt, um mit einem neuen Bandabschnitt verspleißt zu werden. Detaillierte Ausgestaltungen dieses Positioniersystems sind beispielsweise in DE10 119 508 C1 der Anmelderin beschrieben.

Zum leichteren Lösen der Bandabschnitte nach Abschluss des Spleißvorganges von der Spleißklappe beziehungsweise der Spleißleiste ist bevorzugterweise an der Rückseite der Spleißklappe eine Blasleiste angeordnet, die insbesondere in Richtung Spleißleiste gerichtete Düsen aufweist. Durch die Blasleiste kann ein Luftimpuls während der Schwenkbewegung der Spleißklappe ausgelöst werden und dadurch ein sicheres Ablösen des Bandabschnitts erreicht werden. Insbesondere bei klebrigen Materialien, wie Cordmaterial, kann dadurch eine Veränderung der Position des Bandabschnitts verhindert und geringe Toleranzen mit der Überlappung zum nächsten Bandabschnitt eingehalten werden.

Um einen sicheren Abtransport der miteinander verspleißten Bandabschnitte und ein Durchrutschen der Transportbänder zu verhindern, weisen die Transportbänder zumindest im Bereich zwischen den Unterstützungstischen eine Vakuumansaugung auf. Dadurch können die Bandabschnitte an die Transportbänder angesaugt werden. Damit wird ein sicherer Halt erzielt.

Um auch bei winklig zugeführten Bandabschnitten eine sichere Unterstützung zu bekommen, sind die Unterstützungstische in Linearführungen auf einer Zwischenplatte parallel zu einer Transportrichtung der Transportbänder bewegbar gelagert. Die Unterstützungstische lassen sich dann immer so ausrichten, dass eine möglichst vollständige Unterstützung der Bandabschnitte erreicht wird.

In einer bevorzugten Weiterbildung ist auf der Zwischenplatte eine Mitnehmerplatte drehbar gelagert, wobei die Unterstützungstische über Mitnehmer mit der Mitnehmerplatte verbunden sind und gegebenenfalls ein Drehpunkt der Mitnehmerplatte unterhalb einer zwischen Spleißleiste und Anlagefläche ausgebildeten Spleißlinie angeordnet ist. Mithilfe der drehbar gelagerten Mitnehmerplatte lässt sich eine gleichmäßige Verstellung aller Unterstützungstische gleichzeitig erreichen. Ein Abstand der Unterstützungstische zueinander bleibt dabei konstant, sodass ausreichend Raum für die Transportbänder erhalten wird. Durch die Anordnung des Drehpunktes der Mitnehmerplatte fluchtend mit der Spleißlinie, die durch die Anlage der Spleißleiste an den Bandabschnitten definiert wird, folgt eine bestmögliche Unterstützung. Dabei bleibt beispielsweise ein durch den Drehpunkt verlaufender Unterstützungstisch immer an seiner Position stehen, während die auf einer Seite dieses Unterstützungstisches angeordneten anderen Unterstützungstische beispielsweise in Transportrichtung und die an der anderen Seite des Unterstützungstisches angeordneten Unterstützungstische in die entgegengesetzte Richtung bewegt werden.

Vorzugsweise ist dabei die Mitnehmerplatte an ihren Enden an der Zwischenplatte geführt. Ein am Drehpunkt ausgebildetes Drehlager wird dabei achsial nicht belastet. Vielmehr werden diese Belastungen durch die Führung an den Enden der Mitnehmerplatte aufgenommen und an die Zwischenplatte weitergeleitet.

Zur einfacheren Verstellung kann vorgesehen sein, dass die Spleißeinrichtung einen Antrieb zum Verstellen eines Winkels der Mitnehmerplatte gegenüber der Zwischenplatte aufweist, wobei bei einer Winkelverstellung der Mitnehmerplatte die Unterstützungstische relativ zueinander parallel zur Transportrichtung verschoben werden. Dafür kann die Mitnehmerplatte an einem Ende ein Verzahnungselement aufweisen, das mit einem vom Antrieb antreibbaren Zahnrad in Wirkverbindung steht. Dabei wird ausgenutzt, dass keine vollständige Umdrehung der Mitnehmerplatte erforderlich ist, sondern nur ein Verschwenken um einen relativ geringen Winkelbereich erfolgt. Dies lässt sich mit einem derartigen Verzahnungselement recht einfach realisieren. Dabei ist ein relativ hohes Übersetzungsverhältnis erreichbar, sodass ein relativ günstiger Motor, der bei großer Drehzahl betrieben wird, verwendbar ist. Zusätzlich kann auch noch ein Reduziergetriebe vorgesehen werden.

Um eine Winkelverstellung der Spleißklappe zu erreichen, sind die Seitenwangen vorteilhafterweise auf der Mitnehmerplatte angeordnet, die auf der Zwischenplatte drehbar gelagert ist. Bei einer Winkelverstellung der Mitnehmerplatte werden so die Spleißklappe und auch die Querverbindung über die Seitenwangen ebenfalls in ihrem Winkel verstellt. Auch nicht-rechteckige Bandabschnitte, die in einem Winkel von weniger als 90° zugeführt werden, lassen sich dadurch miteinander verspleißen, wobei eine durchgehende, gerade Längskante der miteinander verspleißten Bandabschnitte erreichbar ist.

Zur Einstellung der Spleißeinrichtung auf unterschiedliche Breiten der Bandabschnitte kann diese mit ihrer Zwischenplatte auf einem Gestell parallel zur Transportrichtung verstellbar gelagert sein, wobei für eine Verstellbewegung insbesondere ein Spindeltrieb vorgesehen ist. Die Transportrichtung entspricht der Förderrichtung der Transportbänder. Es handelt sich also um eine horizontale Stellbewegung. Eine derartige Verstellung ist insbesondere dann vorteilhaft, wenn die Bandabschnitte nicht über die Transportbänder zur Spleißeinrichtung zugeführt werden, sondern beispielsweise mithilfe eines Hochhalters direkt in der Spleißeinrichtung derartig abgelegt werden, dass die Ausrichtung des neuen Bandabschnitts mit den vorhergehenden Bandabschnitten bereits dadurch sichergestellt wird. Dadurch kann eine Anpassung an unterschiedliche Breiten der Bandabschnitte erfolgen.

Zur Steigerung des Ausstoßes und dem Erreichen kurzer Zykluszeiten bei hoher Genauigkeit ist es vorteilhaft, dass die Spleißeinrichtung mit einer Schere als integrierte Einheit ausgebildet ist, die gegebenenfalls am Gestell befestigt ist. Ein Zwischentransport der Bandabschnitte fällt dadurch sehr kurz aus oder kann sogar vollständig entfallen. Bei gleichbleibenden Toleranzen kann so eine Erhöhung des Ausstoßes erreicht werden.

Die Mitnehmerplatte kann ein Kopplungselement aufweisen, um beispielsweise mit einem Hochhalter verbunden zu werden, sodass bei einer Verstellung des Spleißwinkels über die Mitnehmerplatte automatisch eine Winkelverstellung bei den anderen Komponenten erreicht wird. Die Betriebssicherheit wird damit erhöht und ein Regelungsaufwand gering gehalten.

Die Erfindung wird im Folgenden anhand bevorzugter Ausführungsbeispiele in Verbindung mit der Zeichnung näher beschrieben. Hierin zeigen:
- Fig. 1: eine Prinzipdarstellung der Einbindung einer Spleißeinrichtung in eine Cordschneidanlage,
- Fig. 2: eine Prinzipdarstellung eines typischen Layouts einer Cordschneidanlage,
- Fig. 3: ein erweitertes Anlagenlayout.

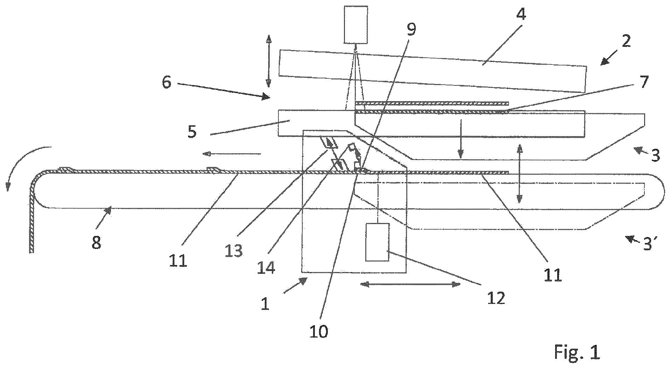

In Figur 1 ist das Prinzip zur Einbindung einer Spleißeinrichtung 1 in eine Schneideinlage für Bandmaterial, insbesondere von Cordmaterial mit Textil- und/oder Stahldrähten, gezeigt. Die Spleißeinrichtung 1 ist dabei als Einheit mit einer Schere 2 und einem auf und ab bewegbaren Hochhalter 3 ausgebildet.

Die Schere 2 weist ein Obermesser 4 und ein Untermesser 5 auf, zwischen denen eine Messeröffnung 6 ausgebildet ist, durch die das Materialband beispielsweise mithilfe einer Rückzugsvorrichtung hindurchgeführt wird. Durch Schließen der Messeröffnung 6, indem beispielsweise das Obermesser 4 nach unten geführt wird, werden Bandabschnitte von dem Materialband abgeschnitten. Diese Bandabschnitte werden bereits während des Schneidens vom Hochhalter 3 gestützt, der sich dafür in seiner oberen Abholposition befindet.

Nach Abschluss des Schneidvorganges wird der Hochhalter 3 vertikal nach unten in seine Abgabeposition bewegt, wobei er den neu abgeschnittenen Bandabschnitt 7 an Transportbänder 8 übergibt. Die Transportbänder 8 sind dabei in Zwischenräumen von einzelnen Hochhalterelementen angeordnet und verlaufen parallel zueinander. Während der Ablage des Bandabschnitts 7 auf die Transportbänder 8 stehen diese still. Die Bewegung der Transportbänder erfolgt schrittweise immer um eine Streifenbreite.

Das gezeigte Ausführungsbeispiel zeigt eine als Überlappspleißer ausgebildete Spleißeinrichtung 1. Dementsprechend wird der neu abgeschnittene Bandabschnitt 7 mit einer Kante 9 überlappend auf eine Kante 10 eines zuvor geschnittenen Bandabschnitts 11 abgelegt. Gegebenenfalls ist zuvor mithilfe von Sensorelementen 12 und durch Festhalten des zuvor geschnittenen Bandabschnitts 11 durch die Niederhaltepins 13 ein Ausrichten der Kante 10 durchgeführt worden.

Zum Herstellen einer Spleißverbindung wird eine Spleißklappe 14 gegebenenfalls mit einer in Figur 1 nicht dargestellten Spleißleiste auf einen überlappenden Bereich der Kanten 9, 10 gedrückt. Durch diese Druckkräfte wird ohne zusätzliche Hilfsmittel eine feste Verbindung zwischen den Bandabschnitten 7, 11 erhalten. Damit wird ein verspleißtes Endlosband produziert, das über die Transportbänder 8 zu weiteren Anlagenkomponenten gefördert werden kann.

In einem nicht dargestellten Ausführungsbeispiels ist die Spleißklappe dabei verschwenkbar an Seitenwangen gelagert. Parallel zu Spleißklappe ist eine ebenfalls mit den Seitenwangen verbundene Querverbindung angeordnet, die sich parallel zur Spleißleiste über eine gesamte Maschinenbreite erstreckt. An einer Unterkante der Spleißklappe ist eine elastische Spleißleiste befestigt.

Unterhalb der Spleißklappe ist eine Mehrzahl von Unterstützungstischenangeordnet, wobei zwischen den Unterstützungstischen jeweils Freiräume ausgebildet sind, in denen die Transportbänder angeordnet sind. Die Bandabschnitte können dann zwischen der Spleißklappe und den Unterstützungstischen mithilfe der Transportbänder hindurchbewegt werden. Die Oberseiten der Unterstützungstische sowie die Oberfläche der Transportbänder bilden dabei eine Anlagefläche, an der die Bandabschnitte durch die Spleißklappe angedrückt werden können, um die Spleißverbindung entlang einer Spleißlinie herzustellen.

Unterseitig sind die Unterstützungstische über Linearführungen in einer Zwischenplatte gelagert, die wiederum über Linearführungen an einem Gestell befestigt werden kann.

Dabei sind die Unterstützungstische mit einer Mitnehmerplatte gekoppelt, an der auch die Seitenwangen befestigt sind. Die Mitnehmerplatte ist um einen Drehpunkt verschwenkbar. Dafür ist ein Antrieb vorgesehen, der über ein Zahnradgetriebe mit der Mitnehmerplatte verbunden ist.

Senkrecht auf die Unterstützungstische insbesondere während des Spleißens wirkende Kräfte werden dabei nicht auf die Mitnehmerplatte übertragen, sondern über die Linearführungen direkt auf die Zwischenplatte.

Die Spleißklappe weist vorderseitig Befestigungsabschnitte auf, an denen Andrückzylinder befestigt werden können. Rückseitig von der Spleißklappe sind an dem Querverbinder entsprechende Befestigungspunkte für die Andrückzylinder vorgesehen.

An einem Ende weist die Mitnehmerplatte ein bogenförmiges Zahnstangenprofil auf, in das ein Zahnrad des Zahnradgetriebes eingreift, sodass bei Rotation des Antriebs eine Winkelverstellung der Mitnehmerplatte gegenüber der Zwischenplatte erfolgt. Die in den Linearführungen geführten Unterstützungstische, die entsprechend mit der Mitnehmerplatte gekoppelt sind, werden bei dieser Drehbewegung relativ zueinander linear bewegt.

Zur Aufnahme von vertikalen Kräften, ist die Mitnehmerplatte an ihren Enden über Führungen an der Zwischenplatte abgestützt.

Zur Übertragung der Winkelverstellung der Mitnehmerplatte auf nebengeordnete Anlagenkomponenten, wie beispielsweise den Hochhalter, ist ein Koppelelement vorgesehen, dass zur Herstellung einer mechanischen Kopplung dient. Dadurch ist eine synchrone Winkelverstellung gewährleistet.

Bei einem winklig zugeführten Bandmaterial 37 wurde die Mitnehmerplatte 24 gegenüber der Zwischenplatte 22 entsprechend verschwenkt und eine lineare Verstellung der Unterstützungstische 19, 55 ist bewirkt worden ist. Dadurch erfolgte eine Verstellung des Spleißwinkels, sodass auch bei derartig winklig zugeführtem Bandmaterial ein Verspleißen der gesamten Kante der Bandabschnitte erfolgen kann.

Über ein Kupplungsmittel ist der Unterstützungstisch mit der Mitnehmerplatte verbunden, um bei einer Verschwenkung der Mitnehmerplatte entsprechend entlang der Linearführung ersetzt werden zu können.

Eine Oberseite der Transportbänder verläuft bündig mit einer Oberfläche der Unterstützungstische , sodass eine ebene Anlagefläche erhalten wird.

Die Spleißklappe it der an ihrer Unterkante befestigten Spleißleiste befindet sich in ihrer oberen Position. Dafür wurde sie mithilfe eines Andrückzylinders nach oben gezogen und entsprechend verschwenkt.

Der Andrückzylinder ist an den Befestigungspunkt der Querverbindung befestigt, während ein Stößel des Andrückzylinders an den Befestigungsabschnitt der Spleißklappe befestigt ist. Der Befestigungsabschnitt ist dabei einer Vorderseite der Spleißklappe zugeordnet, während sich der Befestigungspunkt der Querverbindung hinter einer Rückseite der Spleißklappe befindet.

Rückseitig zur Spleißklappe ist ferner ein Niederhalterpin angeordnet, der in Richtung Unterstützungstisch mithilfe eines Druckzylinders bewegbar ist und so eine Haltekraft auf dem zuvor geschnittenen Bandabschnitt ausüben kann. In der oberen Position des Niederhaltepin ist eine horizontale Bewegung der miteinander verspleißten Bandabschnitte möglich. Ein Ende des Niederhaltepins, das einen Schuh trägt, befindet sich auf der von den Transportbändern abgewandten Seite einer Abstreifvorrichtung. Der Schuh wird also bei jeder Betätigung des Niederhaltepins an der Abstreifvorrichtung vorbei bewegt. Dadurch werden beim Hochfahren eventuell am Ende bzw. am Schuh der Niederhaltepins anhaftende Bandabschnitte sicher gelöst.

Der Hochhalter befindet sich in seiner unteren Abgabeposition, wobei der letzte Bandabschnitt bereits mit den Transportbändern an seine Spleißposition unterhalb der Spleißklappe befördert wurde. Der Hochhalter ist also bereit, nach oben in seine Abholposition verfahren zu werden und einen neuen Bandabschnitt zu stützen.

Wenn nun der Niederhaltepin in Richtung Unterstützungstisch abgesenkt worden ist, hält er den zuvor geschnittenen Bandabschnitt am Unterstützungstisch fest. Ein neu geschnittener Bandabschnitt liegt bereits auf dem Hochhalter, der nun nach unten in seine Abgabeposition verfahren werden kann.

Wenn der Hochhalter in seiner Abgabeposition bewegt worden ist, wurde der neu abgeschnittene Bandabschnitt derartig auf den Transportbändern abgelegt, dass seine Kante die Kante des zuvor geschnittenen Bandabschnitts überlappt.

Zum Durchführen desSpleißvorgangs wird die Spleißklappe durch den Andrückzylinder nach unten verschwenkt und somit eine Andrückkraft auf die Kanten ausgeübt. Die Spleißklappe ist dafür nahezu zentrisch an ihren Stirnseiten über Drehlager gelagert. Zusätzlich wird der Bandabschnitt durch den Niederhaltepin gehalten.

Nach erfolgtem Spleißvorgang wird die Spleißklappe nach oben verschwenkt und auch der Niederhaltepin nach oben verfahren. Dabei wird ein Ende des Niederhaltepins mit dem Schuh durch eine Öffnung in der Abstreifvorrichtung geführt, sodass ein eventuell am Ende des Niederhaltepins bzw. an dessen Schuh anhaftender Bandabschnitts gelöst wird.

In Maschinenquerrichtung können dabei mehrere Andrückzylinder sowie mehrere Niederhaltepins vorgesehen sein. Die genaue Anzahl dieser Elemente richtet sich dabei beispielsweise nach der gewünschten Maschinenbreite. Insbesondere hat es sich als vorteilhaft erwiesen, mindestens drei Andrückzylinder vorzusehen.

Bei der erfindungsgemäßen Spleißeinrichtung wurde der Angriffspunkt der Andrückzylinder von der Rückseite auf die Vorderseite der Spleißklappe verlegt, um eine bessere Montage- und Wartungsmöglichkeit zu erreichen. Über Niederhaltepins kann bereits vor Beginn des Spleißvorgangs ein Fixieren der Bandabschnitte erreicht werden. Damit wird eine bessere Genauigkeit erzielt. Die Niederhaltepins können dabei pneumatisch angesteuert werden, jedoch auch über andere Antriebsmöglichkeiten, beispielsweise hydraulisch oder elektrisch. Jedem Niederhaltepin ist dabei eine Abstreifvorrichtung zugeordnet, die beispielsweise als Abstreifblech ausgebildet ist, die verhindert, dass der Bandabschnitt beim Lösen der Niederhaltepins haften bleibt. Dadurch sind sehr genaue Toleranzen erreichbar.

Im ersten Unterstützungstisch 55 ist eine Vakuumansaugung vorgesehen, um die Bandabschnitte in Richtung Auflagefläche zu ziehen. Insbesondere können dadurch hochstehende Kanten geglättet werden. Optional kann der Spleißklappe eine zusätzliche Blasleiste zugeordnet werden, die über einen Luftimpuls ein leichtes Lösen beim Öffnen der Spleißklappe garantiert.

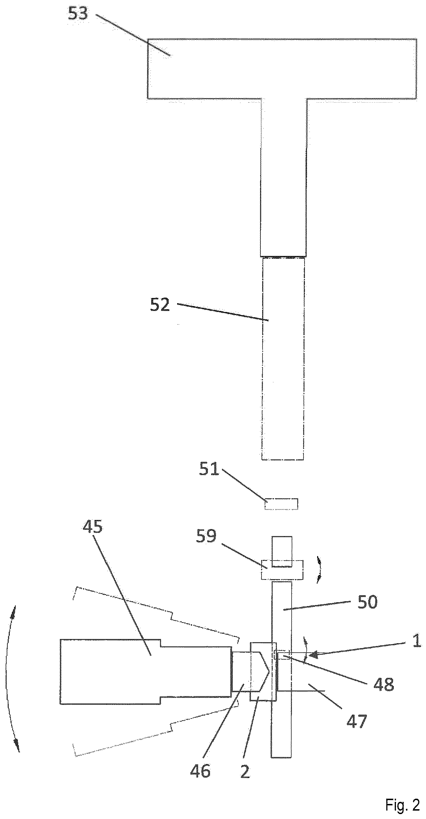

In Figur 2 ist ein typisches Anlagenlayout schematisch in Draufsicht dargestellt, in dem die Schere 2 mit dem Hochhalter 3 und der Spleißeinrichtung 1 als Einheit eingesetzt wird. Die Materialbahn wird dabei von Vorratsrollen in einem Abwickler 45 abgezogen und über einen Tisch 46 der Schere 2 zugeführt. Die mit der Materialbahn bewickelten Rollen werden dafür im Abwickler 45 eingehängt und ausgewickelt. Dabei wird die zu verarbeitende Materialbahn, beispielsweise eine kombinierte Cordbahn, von einer Zwischenlage getrennt, die als Folie, aus Leinen oder ähnlichem hergestellt ist, die dazu dient, ein Verkleben des üblicherweise gummierten Bandes zu verhindern. Der Abwickler 45 kann dabei als Einfachabwickler ausgebildet sein, bei dem nur eine einzige Rolle eingehängt ist, oder auch als Doppelabwickler mit einem Drehtisch zum Einhängen von mindestens zwei Materialrollen, wobei von einer Rolle das Band abgezogen wird, während die andere ausgetauscht werden kann. Anstelle eines Drehtisches kann dabei auch ein Shuttle-Rahmen vorgesehen werden. Die Rolle kann je nach Ausführung direkt im Abwickler aufgehängt werden, oder in einer Kassette angeordnet sein, die in dem Abwickler untergebracht wird. Weitere Ausgestaltungen des Abwicklers sind ebenfalls möglich.

Um verschiedene Schneidwinkel zu realisieren, ist der Abwickler 45 gegenüber der Schere 2 verschwenkbar angeordnet. Dabei wird der zwischen Abwickler 45 und Schere 2 vorgesehene Tisch 46 im Bedarfsfall gemeinsam mit dem Abwickler 45 verschwenkt. Die zu verarbeitende Materialbahn wird über den Tisch 46 in die Schere 2 gezogen. Um den Anfang der Materialbahn einer neuen Rolle zur Schere 2 zu transportieren, ist es bekannt, am Anfang des Tisches 46 oder darüber eine nicht dargestellte Fördereinrichtung vorzusehen. Diese Fördereinrichtung kann beispielsweise eine angetriebene Förderrolle sein.

Mit Hilfe der Schere 2 werden von der Materialbahn Streifen in einer definierten Breite und in einem definierten Winkel abgeschnitten. Alternativ zu einer Schere, die in Form einer Guillotine mit Obermesser und Untermesser aufgebaut ist, können auch andere Typen Verwendung finden. Beispielsweise gibt es Rundmesserscheren mit einem feststehenden Untermesser und einem daran entlangfahrenden Rundmesser sowie Scheren mit einem schnell rotierenden Sägemesser, die ähnlich wie eine Kreissäge aufgebaut sind.

Um nach dem Abschneiden des Streifens den neuen Materialbahnanfang erneut durch die Messeröffnung von der Zuführseite auf die Abtransportseite zu fördern und um die gewünschte Streifenbreite zu ziehen, ist in Zuführrichtung hinter der Messeröffnung bzw. dem Schneidspalt, also auf der Abtransportseite, der Rückzug 47 angeordnet. Eine Ausgestaltung eines derartigen Rückzugs ist beispielsweise in DE 10 113 379 beschrieben.

Anschließend werden die abgeschnittenen Materialbahnstreifen mit ihren an die Schneidkante angrenzenden Kanten wieder miteinander verbunden. Dafür sind an der Abtransportseite der Schere 2 eine oder mehrere Spleißeinrichtungen 1 vorgesehen, in diesem Fall ein Überlappspleißer 48 und ein Stumpfspleißer 49. Beim Spleißen handelt es sich um ein rein mechanisches Verbinden ohne Zuhilfenahme von Zusatzstoffen, wobei die von der Schere 2 abgeschnittenen Streifen an ihren schmalen Seiten miteinander verbunden werden. Häufig wird dabei ein Überlappspleißer eingesetzt, bei denen die Enden der Streifen überlappend zueinander gelegt werden und durch Druckbeaufschlagung im Überlappspleißer überlappend miteinander verbunden werden. Der Spleißer ist dabei in der Regel verschwenkbar, um die Streifen in verschiedenen Winkeln verarbeiten zu können. Es ist aber auch üblich, feststehende Spleißer vorzusehen.

Während der Überlappspleißer 48 als Einheit mit dem hinter der Messeröffnung angeordneten Hochhalter 1 ausgebildet ist, wird der Stumpfspleißer 49 alternativ oder zusätzlich mit einem gewissen Abstand dazu angeordnet, wobei die abgeschnittenen Materialbahnstreifen durch eine Fördereinrichtung 50, wie beispielsweise ein Transportband, zum Stumpfspleißer 49 gefördert werden. Dort werden die Materialbahnstreifen stumpf miteinander verbunden.

Die Fördereinrichtung 50 wird in jedem Fall schrittweise um jeweils eine Streifenlänge vorwärtsbewegt, um die jeweils abgeschnittenen Materialbahnstreifen hintereinander auf der Fördereinrichtung 50 positionieren zu können.

Die wieder miteinander verbundenen Materialbahnstreifen werden über eine optionale Beruhigungsrolle 51 und über eine optionale Belegvorrichtung 52 einem Aufwickler 53 zugeführt. In der Belegevorrichtung 52 können weitere Gummistreifen, beispielsweise bis zu 12 Stück, gleichzeitig auf die miteinander verbundenen Streifen aufgelegt werden. Dabei kann auch eine Einfassung von Außenkanten erfolgen, indem beispielsweise ein Gummistreifen an der Außenkante mit Überstand aufgelegt und um die Kante herumgelegt wird. Damit wird ein an der Außenkante freiliegender Cord ummantelt.

Im Aufwickler 53 werden die miteinander verbundenen Materialbahnstreifen wieder auf Spulen aufgewickelt. In der Regel wird dabei eine Zwischenlage, die ein Verkleben der einzelnen Lagen verhindert, mit aufgewickelt. Für den Aufwickler gibt es verschiedenste Ausführungsformen: Der Aufwickler kann beispielsweise als Einfachaufwickler ausgebildet sein, in dem die miteinander verbundenen Streifen manuell abgelenkt und einer neuen Rolle zugeführt werden müssen, es ist aber auch bekannt, vollautomatische Aufwickler vorzusehen, in denen für das Handling keine Bedienereingriffe notwendig sind.

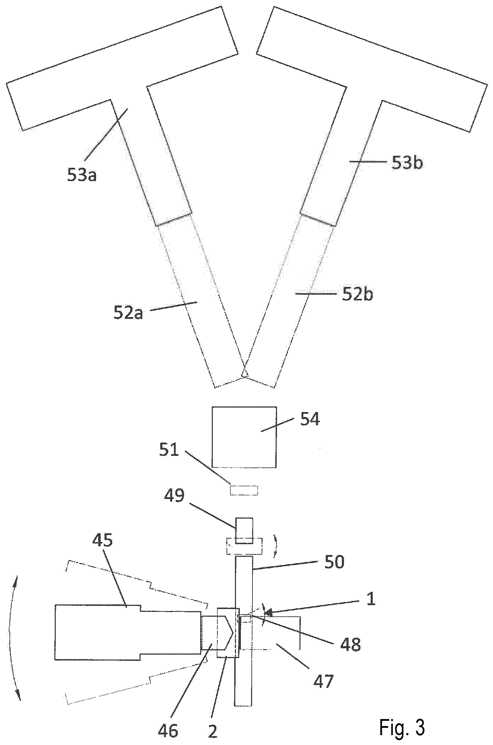

In Fig. 3 ist ein erweitertes Gesamtanlagenlayout dargestellt, bei dem im Anschluss an die Spleißeinrichtungen gegebenenfalls hinter einer optionalen Beruhigungsrolle 51 eine Längsschneideeinrichtung 54 vorgesehen ist, durch die die erzeugte Streifenbahn geführt und dabei beispielsweise in zwei Längsbahnen getrennt wird. Diese beiden Längsbahnen werden dann zwei Aufwicklern 53a, 53b zugeführt. Damit wird ein Ausstoß der Anlage erhöht. In der Längsschneidevorrichtung 54, die auch als Slitter bezeichnet wird, finden in der Regel Rundmesser Verwendung.

Zwischen der Längsschneideeinrichtung 54 und dem Aufwicklern 53a, 53b können optional, wie auch im Gesamtanlagenlayout nach Fig. 19, entsprechend aufgebaute Belegevorrichtungen 52a, 52b vorgesehen sein

In den Figuren 2 und 3 sind nur zur Veranschaulichung typische Anlagenlayouts dargestellt. Ein spiegelbildlicher Aufbau ist beispielsweise ebenfalls problemlos möglich, wie auch das Vorsehen zusätzlicher oder das Weglassen einzelner Anlagenelemente.

Die Erfindung ist nicht auf eine der vorbeschriebenen Ausführungsformen beschränkt, sondern in vielfältiger Weise abwandelbar.

Sämtliche aus den Ansprüchen, der Beschreibung und der Zeichnung hervorgehenden Merkmale und Vorteile, einschließlich konstruktiver Einzelheiten, räumlicher Anordnungen und Verfahrensschritten, können sowohl für sich als auch in den verschiedensten Kombinationen erfindungswesentlich sein.

### Bezugszeichenliste

- 1: Spleißeinrichtung
- 2: Schere
- 3: Hochhalter
- 4: Obermesser
- 5: Untermesser
- 6: Messeröffnung
- 7: Neuer Bandabschnitt
- 8: Transportbänder
- 9: Kante
- 10: Kante
- 11: Zuvor geschnittener Bandabschnitt
- 12: Sensorelemente
- 13: Niederhaltepins
- 14: Spleißklappe
- 15:
- 45: Abwickler
- 46: Tisch
- 47: Rückzug
- 48: Überlappspleißer
- 49: Stumpfspleißer
- 50: Fördereinrichtung
- 51: Belegvorrichtung
- 52: Belegvorrichtung
- 53: Aufwickler
- 54: Längsschneideinrichtung

## Patentansprüche

1. Spleißeinrichtung (1) zum Spleißen von Bandabschnitten (7, 11) eines Materialbandes insbesondere aus einem Cordmaterial, das eine Verstärkung aus Textil- und/oder Strahldrähten aufweist, mit einer Spleißklappe (14), die parallel zu ihrer Längsachse verschwenkbar gelagert ist, wobei die Bandabschnitte (7, 11) zwischen einer Unterseite der Spleißklappe (14) und einer Anlagefläche hindurchführbar sind und die Spleißklappe (14) über Andrückzylinder in Richtung Anlagefläche zum Herstellen einer Spleißverbindung zwischen zwei Bandabschnitten (7, 11) betätigbar ist, wobei die Andrückzylinder zwischen einer Querverbindung und der Spleißklappe angeordnet sind, **dadurch gekennzeichnet, dass** die Andrückzylinder mit ihrem einen Ende an der Querverbindung rückseitig bezüglich der Spleißklappe und mit ihrem anderen Ende an vorderseitigen Befestigungsabschnitten der Spleißklappe (14) befestigt sind.

2. Spleißeinrichtung nach Anspruch 1, **dadurch gekennzeichnet, dass** an der Unterseite der Spleißklappe (14) eine elastische Spleißleiste angeordnet ist.

3. Spleißeinrichtung nach Anspruch 1 oder 2, **dadurch gekennzeichnet, dass** die Spleißklappe (14) in Seitenwangen gelagert ist, die mit der Querverbindung verbunden sind.

4. Spleißeinrichtung nach einem der vorhergehenden Ansprüche, **dadurch gekennzeichnet, dass** die Anlagefläche an unterhalb der Spleißklappe (14) angeordneten Unterstützungstischen und an zwischen den Unterstützungstischen parallel zueinander angeordneten Transportbändern ausgebildet ist.

5. Spleißeinrichtung nach Anspruch 4, **dadurch gekennzeichnet, dass** zumindest ein äußerer Unterstützungstisch eine Vakuumansaugung aufweist.

6. Spleißeinrichtung nach einem der vorhergehenden Ansprüche, **dadurch gekennzeichnet, dass** an der Querverbindung Niederhaltepins angeordnet sind, die in Richtung Anlagefläche bewegbar sind.

7. Spleißeinrichtung nach Anspruch 7, **dadurch gekennzeichnet, dass** die Niederhaltepins über Druckzylinder betätigbar sind.

8. Spleißeinrichtung nach einem der vorhergehenden Ansprüche, **dadurch gekennzeichnet, dass** an der Querverbindung mindestens eine Abstreifvorrichtung angeordnet ist, wobei gegebenenfalls jedem Niederhaltepin eine Abstreifvorrichtung zugeordnet ist.

9. Spleißeinrichtung nach Anspruch 9, **dadurch gekennzeichnet, dass** der Niederhaltepin durch eine Öffnung in der Abstreifvorrichtung bewegbar ist.

10. Spleißeinrichtung nach einem der vorhergehenden Ansprüche, **dadurch gekennzeichnet, dass** sie Sensorelemente (12) zum Detektieren einer Kante des Cordmaterials aufweist, wobei die Sensorelemente (12) insbesondere in Maschinenquerrichtung nebeneinander angeordnet sind.

11. Spleißeinrichtung nach einem der vorhergehenden Ansprüche, **dadurch gekennzeichnet, dass** an der Rückseite der Spleißklappe (14) eine Blasleiste angeordnet ist, die insbesondere in Richtung Spleißleiste gerichtete Düsen aufweist.

12. Spleißeinrichtung nach einem der vorhergehenden Ansprüche, **dadurch gekennzeichnet, dass** die Transportbänder (8) zumindest im Bereich zwischen den Unterstützungstischen eine Vakuumansaugung aufweisen.

13. Spleißeinrichtung nach einem der Ansprüche 4 bis 12, **dadurch gekennzeichnet, dass** die Unterstützungstische in Linearführungen auf einer Zwischenplatte parallel zu einer Transportrichtung der Transportbänder bewegbar gelagert sind.

14. Spleißeinrichtung nach Anspruch 14, **dadurch gekennzeichnet, dass** auf der Zwischenplatte eine Mitnehmerplatte drehbar gelagert ist, wobei die Unterstützungstische über Kopplungsmittel mit der Mitnehmerplatte verbunden sind und gegebenenfalls ein Drehpunkt der Mitnehmerplatte unterhalb einer zwischen Spleißleiste und Anlagefläche ausgebildeten Spleißlinie angerordnet ist.

15. Spleißeinrichtung nach Anspruch 15, **dadurch gekennzeichnet, dass** die Mitnehmerplatte an ihren Enden an der Zwischenplatte geführt ist.

16. Spleißeinrichtung nach einem der Ansprüche 15 bis 16, **dadurch gekennzeichnet, dass** sie einen Antrieb zum Verstellen eines Winkels der Mitnehmerplatte gegenüber der Zwischenplatte aufweist, wobei bei einer Winkelverstellung der Mitnehmerplatte die Unterstützungstische relativ zueinander parallel zur Transportrichtung verschiebbar sind.

17. Spleißeinrichtung nach einem der Ansprüche 15 bis 17, **dadurch gekennzeichnet, dass** die Mitnehmerplatte an einem Ende ein Verzahnungselement aufweist, das mit einem vom Antrieb antreibbaren Zahnrad in Wirkverbindung steht.

18. Spleißeinrichtung nach einem der Ansprüche 14 bis 17, **dadurch gekennzeichnet, dass** die Zwischenplatte auf einem Gestell parallel zur Transportrichtung verstellbar gelagert ist, wobei für eine Verstellbewegung insbesondere ein Spindeltrieb vorgesehen ist.

## Claims

1. Splicing device (1) for splicing strip portions (7, 11) of a material strip in particular made of a corduroy material, which has a reinforcement made of textile cable and/or steel wires, with a splicing flap (14) which is pivotably disposed parallel to its longitudinal axis, wherein the strip portions (7, 11) can be threaded between a lower surface of the splicing flap (14) and an abutment surface and the splicing flap (14) can be operated by means of pressure cylinders in the direction of the abutment surface in order to create a splicing connection between two strip portions (7, 11), wherein the pressure cylinders are disposed between a transverse connection and the splicing flap, **characterised in that** the pressure cylinders are fastened with their one end at the transverse connection at the back with relation to the splicing flap and with their other end at the front fastening sections of the splicing flap (14).

2. Splicing device according to claim 1, **characterised in that** an elastic splicing strip is disposed on the lower side of the splicing flap (14).

3. Splicing device according to claim 1 or 2, **characterised in that** the splicing flap (14) is mounted in lateral flanks which are connected with the transverse connection.

4. Splicing device according to one of the preceding claims, **characterised in that** the abutment surface is formed at support tables disposed below the splicing flap (14) and at transport strips disposed parallel to one another between the support tables.

5. Splicing device according to claim 4, **characterised in that** at least one outer support table has a vacuum suction.

6. Splicing device according to one of the preceding claims, **characterised in that** holding down pins are disposed at the transverse connection, said holding down pins being movable in the direction of the abutment surface.

7. Splicing device according to claim 7, **characterised in that** the holding down pins can be operated by means of pressure cylinders.

8. Splicing device according to one of the preceding claims, **characterised in that** at least one scraping device is disposed at the transverse connection, wherein where necessary a scraping device is assigned to each holding down pin.

9. Splicing device according to claim 9, **characterised in that** the holding down pin can be moved through an opening in the scraping device.

10. Splicing device according to one of the preceding claims, **characterised in that** it has sensor elements (12) for detecting an edge of the corduroy material, wherein the sensor elements (12) are disposed particularly in a machine transverse direction next to one another.

11. Splicing device according to one of the preceding claims, **characterised in that** at the back side of the splicing flap (14) a blowing strip is disposed, which in particular has nozzles aimed in the direction of the splicing strip.

12. Splicing device according to one of the preceding claims, **characterised in that** the transport strips (8) at least in the region between the support tables have a vacuum suction.

13. Splicing device according to one of claims 4 to 12, **characterised in that** the support tables are mounted movably in linear guides on an intermediate plate parallel to a transport direction of the transport strips.

14. Splicing device according to claim 14, **characterised in that** a driving plate is pivotably mounted on the intermediate plate, wherein the support tables are connected by means of coupling means with the driving plate and where necessary a turning point of the driving plate is disposed below a splicing line formed between splicing strip and abutment surface.

15. Splicing device according to claim 15, **characterised in that** driving plate is guided at its ends at the intermediate plate.

16. Splicing device according to one of claims 15 to 16, **characterised in that** it has a drive for altering an angle of the driver plate with respect to the intermediate plate, wherein when an angle of the driver plate is altered, the support tables can be shifted relatively to one another parallel to the transport direction.

17. Splicing device according to one of claims 15 to 17, **characterised in that** the driver plate has at one end a gear element which is in operational connection with a gearwheel which can be driven by the drive.

18. Splicing device according to one of claims 14 to 17, **characterised in that** the intermediate plate is adjustably mounted on a bracket parallel to the transport direction, wherein a spindle drive is particularly provided for an adjustment movement.

## Revendications

1. Dispositif d'épissurage (1) pour épissurer des sections de bande (7, 11) d'une bande de matériau, en particulier d'un matériau de type cordage, qui présente un renfort de fils textiles et de fils d'acier, avec un volet d'épissurage (14) qui est monté à pivotement parallèlement à son axe longitudinal, dans lequel les sections de bande (7, 11) peuvent passer entre un côté inférieur du volet d'épissurage (14) et une surface d'appui et le volet d'épissurage (14) peut être commandé via des cylindres de pression dans la direction de la surface d'appui pour élaborer une épissure entre deux sections de bande (7, 11), dans lequel les cylindres de pression sont agencés entre une liaison transversale et le volet d'épissurage, **caractérisé en ce que** les cylindres de pression sont fixés par leur première extrémité à la liaison transversale côté arrière par rapport au volet d'épissurage et par leur autre extrémité à des sections de fixation côté avant du volet d'épissurage (14).

2. Dispositif d'épissurage selon la revendication 1, **caractérisé en ce qu'**un listel d'épissurage élastique est agencé sur le côté inférieur du volet d'épissurage (14).

3. Dispositif d'épissurage selon la revendication 1 ou 2, **caractérisé en ce que** le volet d'épissurage (14) est monté sur des joues latérales qui sont reliées à la liaison transversale.

4. Dispositif d'épissurage selon l'une quelconque des revendications précédentes, **caractérisé en ce que** la surface d'appui est formée sur des plateaux de soutien agencés en dessous du volet d'épissurage (14) et sur des bandes transporteuses agencées entre les plateaux de soutien parallèlement l'une à l'autre.

5. Dispositif d'épissurage selon la revendication 4, **caractérisé en ce qu'**au moins un plateau de soutien extérieur présente une aspiration sous vide.

6. Dispositif d'épissurage selon l'une quelconque des revendications précédentes, **caractérisé en ce que** sont agencées sur la liaison transversale des broches de retenue qui peuvent se déplacer dans la direction de la surface d'appui.

7. Dispositif d'épissurage selon la revendication 7, **caractérisé en ce que** les broches de retenue peuvent être commandées via des cylindres de pression.

8. Dispositif d'épissurage selon l'une quelconque des revendications précédentes, **caractérisé en ce qu'**au moins un dispositif de raclage est agencé sur la liaison transversale, dans lequel éventuellement à chaque broche de retenue est affecté un dispositif de détachement.

9. Dispositif d'épissurage selon la revendication 9, **caractérisé en ce que** la broche de retenue peut être déplacée à travers une ouverture dans le dispositif de raclage.

10. Dispositif d'épissurage selon l'une quelconque des revendications précédentes, **caractérisé en ce qu'**il présente des éléments de détection (12) pour détecter un bord du matériau de type cordage, dans lequel les éléments de détection (12) sont agencés l'une à côté de l'autre en particulier dans le sens travers de la machine.

11. Dispositif d'épissurage selon l'une quelconque des revendications précédentes, **caractérisé en ce qu'**est agencé sur le côté arrière du volet d'épissurage (14) une barrette soufflante qui présente en particulier des buses dirigées dans la direction du listel d'épissurage.

12. Dispositif d'épissurage selon l'une quelconque des revendications précédentes, **caractérisé en ce que** les bandes transporteuses (8) présentent une aspiration sous vide au moins dans la zone comprise entre les plateaux de soutien.

13. Dispositif d'épissurage selon l'une quelconque des revendications 4 à 12, **caractérisé en ce que** les plateaux de soutien sont montés mobiles dans des guides linéaires sur une plaque intermédiaire parallèlement à une direction de transport des bandes transporteuses.

14. Dispositif d'épissurage selon la revendication 14, **caractérisé en ce qu'**une plaque d'entraînement est montée à rotation sur la plaque intermédiaire, dans lequel les plateaux de soutien sont reliés à la plaque d'entraînement via des moyens de couplage et éventuellement un point de rotation de la plaque d'entraînement est agencé en dessous d'une ligne d'épissurage formée entre l'éclisse d'épissurage et la surface d'appui.

15. Dispositif d'épissurage selon la revendication 15, **caractérisé en ce que** la plaque d'entraînement est guidée sur la plaque intermédiaire à ses extrémités.

16. Dispositif d'épissurage selon l'une quelconque des revendications 15 à 16, **caractérisé en ce qu'**il présente un entraînement pour ajuster un angle de la plaque d'entraînement vis-à-vis de la plaque intermédiaire, dans lequel, lors d'un ajustement de l'angle de la plaque d'entraînement, les plateaux de soutien peuvent être déplacés l'une par rapport à l'autre parallèlement à la direction de transport.

17. Dispositif d'épissurage selon l'une quelconque des revendications 15 à 17, **caractérisé en ce que** la plaque d'entraînement présente à une extrémité un élément d'engrenage qui est en liaison active avec une roue dentée entraînable par l'entraînement.

18. Dispositif d'épissurage selon l'une quelconque des revendications 14 à 17, **caractérisé en ce que** la plaque intermédiaire est montée sur un châssis mobile parallèlement à la direction de transport, dans lequel en particulier un mécanisme à broche est prévu pour un déplacement de réglage.
